(19) Europäisches Patentamt / European Patent Office / Office européen des brevets

(11) **EP 4 601 317 A1**

(12) **EUROPEAN PATENT APPLICATION**
published in accordance with Art. 153(4) EPC

(43) Date of publication:
**13.08.2025 Bulletin 2025/33**

(21) Application number: **23893785.8**

(22) Date of filing: **20.11.2023**

(51) International Patent Classification (IPC):
*H04Q 11/00* *(2006.01)*

(52) Cooperative Patent Classification (CPC):
**H04J 3/16; H04Q 11/00**

(86) International application number:
**PCT/CN2023/132661**

(87) International publication number:
**WO 2024/109695 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.11.2022 CN 202211469162**

(71) Applicant: **Huawei Technologies Co., Ltd.**
**Shenzhen, Guangdong 518129 (CN)**

(72) Inventors:
• **SU, Wei**
  **Shenzhen, Guangdong 518129 (CN)**
• **SUN, Liang**
  **Shenzhen, Guangdong 518129 (CN)**
• **ZHENG, Shuqian**
  **Shenzhen, Guangdong 518129 (CN)**

(74) Representative: **Huawei European IPR**
**Huawei Technologies Duesseldorf GmbH**
**Riesstraße 25**
**80992 München (DE)**

(54) **BANDWIDTH ADJUSTMENT METHOD AND APPARATUS**

(57)     A bandwidth resize method and apparatus are provided, relate to the field of optical communication technologies, and are used to improve a bandwidth resize rate. In this application, a size of a service container is adjusted with bandwidth (or a rate) of an OSU frame. When determining that bandwidth of service data needs to be resized, a source node updates a value of a first indication in a data unit frame to indicate a bandwidth resize location, and may further determine an actual start location of bandwidth changing based on the bandwidth resize location, to map a part that is in the data unit frame and that is located before the actual start location to a service container before resizing, and map a part that is in the data unit frame and that is located after the actual start location to a service container before resizing. In comparison with an existing case in which one byte is resized every 125 µs, in this application, first bandwidth is resized to second bandwidth through only one operation. This increases the bandwidth resize rate.

FIG. 4

**Description**

**CROSS-REFERENCE TO RELATED APPLICATIONS**

This application claims priority to Chinese Patent Application No. 202211469162.0, filed with the China National Intellectual Property Administration on November 22, 2022 and entitled "BANDWIDTH RESIZE METHOD AND APPARATUS", which is incorporated herein by reference in its entirety.

**TECHNICAL FIELD**

This application relates to the field of optical communication technologies, and in particular, to a bandwidth resize method and apparatus.

**BACKGROUND**

An optical transport network (optical transport network, OTN) has become a mainstream technology used in a transport network because the optical transport network has features such as high bandwidth, a large capacity, high reliability, and a low latency. The OTN is widely applied to backbone, metropolitan core, aggregation, and other networks. Currently, the OTN is further expanded to an access network. Currently, the OTN may provide a high-bandwidth transmission capability such as n*1.25 Gbps or n*5 Gbps, and may provide a low-bandwidth transmission capability, for example, an optical service unit (OSU) is used. When a service signal is transmitted, the service signal is mapped to the OSU, and then the OSU is mapped to a payload area of a flexible optical data unit (flexible optical data unit, ODUflex) for transmission.

In some scenarios, a rate of an OSU may increase because of a service requirement. Currently, a solution in which one byte is resized every 125 µs is used, and fast bandwidth resizing is not supported.

**SUMMARY**

Embodiments of this application provide a bandwidth resize method and apparatus, to improve a bandwidth resize rate.

According to a first aspect, an embodiment of this application provides a bandwidth resize method, applied to a first network node. The bandwidth resize method includes the following steps: Service data is obtained. The service data is mapped to a plurality of data unit frames, where a payload area of the plurality of data unit frames is used to carry the service data. When it is determined that bandwidth of the service data needs to be resized, a first indication carried in a first data unit frame of the plurality of data unit frames is set to a specified value. When the first indication is the specified value, the first indication indicates a bandwidth resize location of the service data that is in the plurality of data unit frames. A first location at which bandwidth of the plurality of data unit frames changes from first bandwidth to second bandwidth on the first network node is determined based on the bandwidth resize location. A part that is in the plurality of data unit frames and that is located before the first location is mapped to a first service container of an optical transport network (OTN) frame. A part that is in the plurality of data unit frames and that is located after the first location is mapped to a second service container of the OTN frame. The OTN frame is sent.

In embodiments of this application, a size of a service container is adjusted with bandwidth (or a rate) of an OSU. When determining that the bandwidth of the service data needs to be resized, a source node updates a value of the first indication in the data unit frames to indicate the bandwidth resize location, and may further determine, based on the bandwidth resize location, an actual start location of bandwidth changing, to map a part that is in the data unit frames and that is located before the actual start location to a service container before resizing, and map a part that is in the data unit frames and that is located after the actual start location to a service container before resizing. In comparison with an existing case in which one byte is resized every 125 µs, in this application, the first bandwidth is resized to the second bandwidth through only one operation. This increases a bandwidth resize rate.

In a possible design, an overhead area of the first data unit frame further carries a second indication. The second indication indicates a quantity of network nodes that the plurality of data unit frames pass through. A network node that the plurality of data unit frames pass through is a network node that completes mapping of the plurality of data unit frames to the OTN frame at a service layer.

In a possible design, that a first location at which bandwidth of the plurality of data unit frames changes from first bandwidth to second bandwidth on the first network node is determined based on the bandwidth resize location includes: adjusting a value of the second indication in the first data unit frame to be accumulated by 1; and determining the first location based on the bandwidth resize location and a value of the second indication after adjustment.

In the foregoing design, an actual resize location of the bandwidth is determined based on the second indication, so that an FIFO waterline that is of a current node and that is used to buffer the OSU can be adjusted. This prevents an exception caused by FIFO overflow or FIFO read empty.

In a possible design, the first location satisfies:

$$W = y + HA * n$$

W represents the first location, y represents the bandwidth resize location, HA represents the second indication, and n is a preset value.

In a possible design, n is related to a bandwidth difference between the first bandwidth and the second bandwidth. n may be a quantity of slots corresponding to the bandwidth difference.

In a possible design, that a part that is in the plurality of data unit frames and that is located before the first location is mapped to a first service container of the OTN frame, and a part that is in the plurality of data unit frames and that is located after the first location is mapped to a second service container of the OTN frame includes: determining a boundary point between the first service container and the second service container in the OTN frame based on the first location, the first bandwidth, and the second bandwidth; and based on the boundary point, mapping the part that is in the plurality of data unit frames and that is located before the first location to the first service container of the OTN frame, and mapping the part that is in the plurality of data unit frames and that is located after the first location to the second service container of the OTN frame.

In a possible design, the boundary point satisfies:

$$Y = X + \text{celling}(\frac{(W-x)\times P}{C_m(M)}), \text{ where } X + \text{celling}\left(\frac{(W-x)\times P}{C_m(M)}\right) < P(); \text{ or}$$

$$Y = X + \text{celling}\left(\frac{(W-x)\times P}{C_m(M)}\right) - P, \text{ where } X + \text{celling}\left(\frac{(W-x)\times P}{C_m(M)}\right) \geq P.$$

Y represents the boundary point, y represents the bandwidth resize location, X represents a mapping location to which the first indication in the first data unit frame is mapped and that is on the OTN frame, x represents a location of the first indication in the plurality data unit frames, W represents the first location, P represents a size of the first service container or a size of the second service container, $C_m(M)$ represents a quantity of data blocks in a service container of the OTN frame to which the plurality of data unit frames are mapped before bandwidth resizing, and celling( ) represents rounding up.

The foregoing design provides a possible effective manner of mapping an actual resize location of the bandwidth to an actual OTN location.

In a possible design, the overhead area of the OTN frame includes an overhead region corresponding to each slot in the payload area of the OTN frame. An overhead region of a last slot included in the first service container carries a mapping overhead of mapping the plurality of data unit frames to the first service container.

In a possible design, that a part that is in the plurality of data unit frames and that is located before the first location is mapped to a first service container of the OTN frame, and a part that is in the plurality of data unit frames and that is located after the first location is mapped to a second service container of the OTN frame includes:

The part that is in the plurality of data unit frames and that is located before the first location is mapped to M slots of the OTN frame, and the part that is in the plurality of data unit frames and that is located after the first location is mapped to M+N slots or M-N slots of the OTN frame. The first service container includes the M slots, and the first bandwidth corresponds to bandwidth of the M slots. The second service container includes the M+N slots or includes the M-N slots, and the second bandwidth corresponds to bandwidth of the M+N slots or bandwidth of the M-N slots.

In a possible design, the data unit frame is an optical service unit (OSU), and/or the OTN frame is an optical data unit (ODU) frame.

In a possible design, the first service container includes the M slots, and the first bandwidth corresponds to the bandwidth of the M slots. The second service container includes the M+N slots or includes the M-N slots, and the second bandwidth corresponds to the bandwidth of the M+N slots or the bandwidth of the M-N slots. The overhead area of the OTN frame includes the overhead region corresponding to each slot in the payload area of the OTN frame, and overhead regions corresponding to the N slots are used to carry interaction information needed for the bandwidth resizing.

In a possible design, the interaction information includes one or more of a resize protocol RP, tributary slot connectivity check TSCC, a tributary port identifier TPID, control information CTRL, and a tributary slot group status TSGS.

In a possible design, the first network node is a source node on a transmission path of the service data.

According to a second aspect, an embodiment of this application provides another bandwidth resize method, applied to a second network node. The method includes: An optical transport network (OTN) frame is received. The OTN frame is used to carry a plurality of data unit frames, and payload areas of the plurality of data unit frames carry service data.

A first data unit frame is demapped from a first service container of the OTN frame. A first indication carried in the first data unit frame is a specified value, and indicates a bandwidth resize location of the service data in the plurality of data unit frames. A first location at which bandwidth of the plurality of data unit frames changes from first bandwidth to second bandwidth is determined based on the bandwidth resize location. A part that is in the plurality of data unit frames and that is located before the first location continues to be demapped from the first service container of the OTN frame, and a part that is in the plurality of data unit frames and that is located after the first location is demapped from a second service container of the OTN frame.

In a possible design, an overhead area of the first data unit frame further carries a second indication. The second indication indicates a quantity of network nodes that the plurality of data unit frames pass through. The network node that the plurality of data unit frames pass through is a network node that completes mapping of the plurality of data unit frames to the OTN frame at a service layer.

In a possible design, that a first location at which bandwidth of the plurality of data unit frames changes from first bandwidth to second bandwidth is determined based on the bandwidth resize location includes:
determining the first location based on the bandwidth resize location and a value of the second indication.

In a possible design, the first location satisfies:

$$W = y + HA * n$$

W represents the first location, y represents the bandwidth resize location, HA represents the second indication, and n is a preset value.

In a possible design, that a part that is in the plurality of data unit frames and that is located before the first location continues to be demapped from the first service container of the OTN frame, and a part that is in the plurality of data unit frames and that is located after the first location is demapped from a second service container of the OTN frame includes:

determining a boundary point between the first service container and the second service container in the OTN frame based on the first location, the first bandwidth, and the second bandwidth; and
based on the boundary point, continuing to demap the part that is in the plurality of data unit frames and that is located before the first location from the first service container of the OTN frame, and demapping the part that is in the plurality of data unit frames and that is located after the first location from the second service container of the OTN frame.

In a possible design, the boundary point satisfies:

$$Y = X + \text{celling}\left(\frac{(W-x) \times P}{C_m(M)}\right), \text{ where } X + \text{celling}\left(\frac{(W-x) \times P}{C_m(M)}\right) < P; \text{ or}$$

$$Y = X + \text{celling}\left(\frac{(W-x) \times P}{C_m(M)}\right) - P, \text{ where } X + \text{celling}\left(\frac{(W-x) \times P}{C_m(M)}\right) \geq P.$$

Y represents the boundary point, y represents the bandwidth resize location, X represents a mapping location to which the first indication in the first data unit frame is mapped and that is on the OTN frame, x represents a location of the first indication in the plurality data unit frames, W represents the first location, P represents a size of the first service container or a size of the second service container, $C_m(M)$ represents a quantity of data blocks in a service container of the OTN frame to which the data unit frame is mapped before bandwidth resizing, and celling( ) represents rounding up.

In a possible design, the overhead area of the OTN frame includes an overhead region corresponding to each slot in the payload area of the OTN frame. An overhead region of a last slot included in the first service container carries a mapping overhead of mapping the plurality of data unit frames to the first service container.

In a possible design, the data unit frame is an optical service unit (OSU) frame, and/or the OTN frame is an optical data unit (ODU).

In a possible design, the first service container includes M slots, and the first bandwidth corresponds to bandwidth of the M slots. The second service container includes M+N slots or includes M-N slots, and the second bandwidth corresponds to bandwidth of the M+N slots or bandwidth of the M-N slots.

In a possible design, the overhead area of the OTN frame includes the overhead region corresponding to each slot in the payload area of the OTN frame, and overhead regions corresponding to N slots are used to carry interaction information needed for the bandwidth resizing.

In a possible design, the interaction information includes one or more of a resize protocol RP, tributary slot connectivity check TSCC, a tributary port identifier TPID, control information CTRL, and a tributary slot group status TSGS.

In a possible design, the first network node is a sink node or an intermediate node on a transmission path of the service data.

According to a third aspect, an embodiment of this application provides a bandwidth resize apparatus, used in a network node. The apparatus includes a processor and an optical transceiver. The processor is configured to: perform the method according to the first aspect or any design of the first aspect, or perform the method according to the second aspect or any design of the second aspect, and receive an optical transport network (OTN) frame by using the optical transceiver.

According to a fourth aspect, an embodiment of this application provides a bandwidth resize apparatus, used in a network node. The apparatus includes a processor and a memory. The memory is configured to store program code. The processor is configured to: read and execute the program code stored in the memory, to implement the method according to the first aspect or any design of the first aspect, or implement the method according to the second aspect or any design of the second aspect.

According to a fifth aspect, an embodiment of this application further provides a computer storage medium. The storage medium stores a software program. When the software program is read and executed by one or more processors, the method provided in the first aspect or any design of the first aspect may be implemented, or the method provided in the second aspect or any design of the second aspect may be implemented.

According to a sixth aspect, an embodiment of this application provides a computer program product including instructions. When the computer program product runs on a computer, the computer is enabled to perform the method provided in any design of the first aspect, or the computer is enabled to perform the method provided in any design of the second aspect.

According to a seventh aspect, an embodiment of this application provides a chip, and the chip includes a processor. The processor is configured to: perform the method provided in any design of the first aspect, or perform the method provided in any design of the second aspect.

In a possible design, the chip further includes a communication interface, and the communication interface is coupled to the processor.

In a possible design, the chip is connected to the memory, and is configured to read and execute a software program stored in the memory, to implement the method provided in any design of the first aspect or implement the method provided in any design of the second aspect.

On a basis of the implementations provided in the foregoing aspects, this application may further provide more implementations by combining the implementations.

**BRIEF DESCRIPTION OF DRAWINGS**

FIG. 1 is a schematic diagram of a network architecture;
FIG. 2 is a schematic diagram of a hardware structure of a network device;
FIG. 3 is a schematic diagram of TS distribution using GMP mapping;
FIG. 4 is a schematic flowchart of a bandwidth resize method according to an embodiment of this application;
FIG. 5 is a schematic diagram of a structure of a possible OSU according to an embodiment of this application;
FIG. 6 is a schematic diagram of a service container change according to an embodiment of this application;
FIG. 7 is a schematic diagram of a structure of an RCOH according to an embodiment of this application;
FIG. 8 is a schematic diagram of ODUO overhead area distribution according to an embodiment of this application;
FIG. 9 is a schematic diagram of an overhead region of a last slot of a first service container according to an embodiment of this application;
FIG. 10 is a schematic diagram of slot overhead regions respectively corresponding to an even multiframe and an odd multiframe according to an embodiment of this application;
FIG. 11 is a schematic flowchart of a bandwidth resize method according to an embodiment of this application;
FIG. 12 is a schematic diagram of a transmission path of service data according to an embodiment of this application;
FIG. 13A and FIG. 13B are schematic flowcharts of a bandwidth resize method in a scenario of increasing bandwidth according to an embodiment of this application;
FIG. 14 is a schematic diagram of an end-to-end bandwidth resize procedure according to an embodiment of this application;
FIG. 15 is a schematic diagram of a structure of a possible bandwidth resize apparatus according to an embodiment of this application; and
FIG. 16 is a schematic diagram of a structure of another possible bandwidth resize apparatus according to an embodiment of this application.

**DESCRIPTION OF EMBODIMENTS**

The following describes the technical solutions of embodiments of this application with reference to the accompanying drawings in embodiments of this application.

In the descriptions of this application, unless otherwise specified, "a plurality of" means two or more. In addition, "/" indicates that the objects associated with each other are in an "or" relationship. For example, A/B may represent A or B. In this application, the term "and/or" describes an association relationship between associated objects and indicates that three relationships may exist. For example, A and/or B may indicate the following three cases: Only A exists, both A and B exist, and only B exists. A and B each may be singular or plural. In addition, to clearly describe the technical solutions in embodiments of this application, in embodiments of this application, words such as "first" and "second" are used to distinguish same items or similar items that have basically same functions and functions. Persons skilled in the art may understand that the terms such as "first" and "second" do not limit a quantity or an execution sequence, and the terms such as "first" and "second" do not indicate a definite difference. It should be further noted that, unless otherwise specified, specific descriptions for some technical features in one embodiment may further be used to explain corresponding technical features mentioned in other embodiments.

A network architecture and a service scenario described in embodiments of this application are intended to describe technical solutions in embodiments of this application more clearly, and do not constitute any limitation on the technical solutions provided in embodiments of this application. Persons of ordinary skill in the art may learn that the technical solutions provided in embodiments of this application are also applicable to a similar technical problem as a network architecture evolves and a new service scenario emerges.

The technical solutions provided in embodiments of this application are applicable to an optical network, for example, an OTN. One OTN is usually formed by connecting a plurality of OTN devices through an optical fiber, and may have different topological types such as a line type, a ring type, and a mesh type based on a specific requirement.

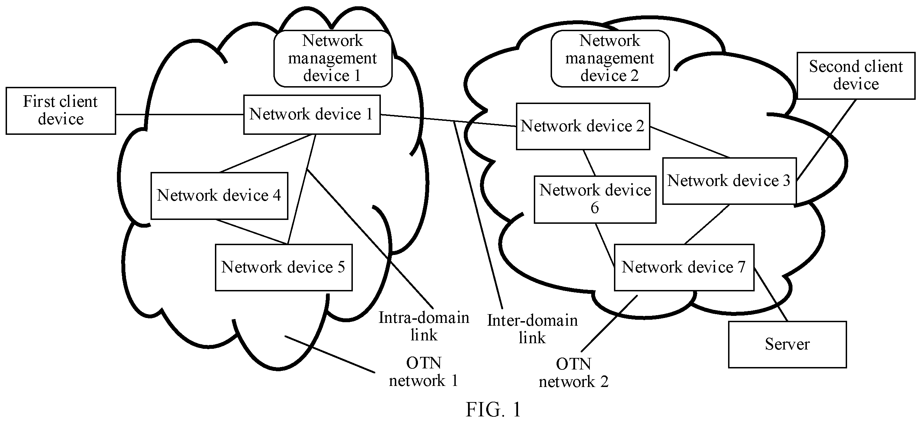

FIG. 1 is a schematic diagram of a network architecture. An OTN shown in FIG. 1 includes two OTN networks (namely, an OTN network 1 and an OTN network 2). Each OTN network includes a specific quantity of network devices (which may also be referred to as OTN devices). A link between network devices in the OTN network is an intra-domain link, and a link between network devices between OTN networks is an inter-domain link. Based on an actual requirement, one network device may have one or more functions. Generally, network devices are classified into an optical layer device, an electrical layer device, and an optical-electrical hybrid device. The optical layer device is a device that can process an optical layer signal, for example, an optical amplifier (optical amplifier, OA). The electrical layer device is a device that can process an electrical layer signal, for example, a device that can process an ODU signal. The optical-electronic hybrid device is a device capable of processing the optical layer signal and the electrical layer signal. It should be noted that, based on a specific integration requirement, one network device may integrate a plurality of different functions. The technical solutions provided in this application are applicable to network devices in different forms and integration degrees. As shown in FIG. 1, the OTN network may further be connected to a client device, for example, a first client device connected to a network device 1 or a second client device connected to a network device 3 in FIG. 1. A quantity of client devices connected to the OTN network is not specifically limited in embodiments of this application. The client device may be user equipment, or may be a server. For example, the second client device is a cloud server. An example in which the OTN network is independently connected to one server to provide a service for a user is used in FIG. 1, and an example of the server is a server connected to a network device 7 in FIG. 1. The network device in the OTN network is configured to transmit service data of the client device. For example, the network device may receive the service data of the client device, then map the service data to an OSU frame, further map the OSU frame to an OTN frame, and send the OTN frame to another network device. For example, the service data may be data of a constant bit rate (constant bit rate, CBR) service, or data of a packet (packet, PKT) type service, or data of a synchronous transport module (synchronous transport module-N, STM-N) service. It should be noted that the network device in embodiments of this application may also be referred to as a network node.

In some embodiments, different OTN networks may be managed by different network management devices. In FIG. 1, a network management device 1 manages the OTN network 1, and a network management device 2 manages the OTN network 2.

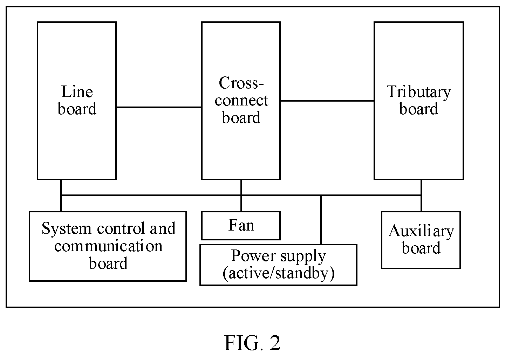

FIG. 2 is a schematic diagram of a hardware structure of a network device. Specifically, the network device includes a power supply, a fan, and an auxiliary board, and may further include a tributary board, a line board, a cross-connect board, and a system control and communication board. The line board may also include an optical layer processing board. It should be noted that each device may specifically include different board types and a different quantity of boards based on a specific requirement. For example, a network device serving as a core node may have no tributary board. A network device serving as an edge node may have a plurality of tributary boards. The power supply is used to supply power to the network device, and may include an active power supply and a standby power supply. The fan is used to dissipate heat of the device. The auxiliary board is used to provide an auxiliary function, for example, providing an external alarm or accessing an external clock. The tributary board, the cross-connect board, and the line board are mainly configured to process an OTN electrical layer signal (referred to as an OTN frame below). The tributary board is configured to receive and send various client services, for example, a synchronous digital hierarchy (synchronous digital hierarchy, SDH) service, a packet service, an Ethernet service, and a fronthaul service. Further, the tributary board may be divided into an optical module on a client side and a signal processor. The optical module on the client side may be an optical transceiver, and is configured to receive and/or send a client signal. The signal processor is configured to implement mapping and demapping between the client signal and the OTN frame. The cross-connect board is configured to implement exchange of the OTN frame, and complete exchange of one or more types of OTN frames. The line board mainly implements processing of an OTN frame on a line side. Specifically, the line board may be divided into an optical module on the line side and a signal processor. The optical module on the line side may be an optical transceiver on the line side, and is configured to receive and/or send the OTN frame. The signal processor is configured to implement multiplexing and demultiplexing, or mapping and demapping of the OTN frame on the line side. The system control and communication board are used to implement system control and communication. Specifically, information may be collected from different boards via a backplane, or a control instruction is sent to a corresponding board via a backplane. Unless otherwise specified, there may be one or more specific components (for example, tributary boards). This is not limited in this application. It should be noted that types of boards included in the device and specific function designs and quantities of the boards are not limited in embodiments of this application.

The following first describes technical concepts in embodiments of this application.

(1) A network node may be referred to as a node for short, or may be referred to as a network device, and is, for example, an OTN device.

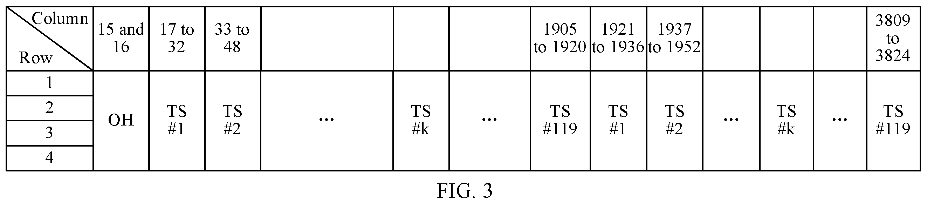

(2) A data unit frame includes an integer number of bytes or bits. The data unit frame may also be referred to as an optical service unit (optical service unit, OSU) frame, a flexible optical service unit (flexible optical service unit, OSUflex), an optical service data unit frame, an optical service unit, a payload code block, a payload block, a switching unit or a switching code block, or a first OTN frame. This is not specifically limited in this application. The data unit frame may alternatively be of another frame type, and a rate of the data unit frame is lower than a rate of a mapped OTN frame. FIG. 3 is a possible schematic diagram of a structure of a data unit frame. As shown in FIG. 3, the data unit frame includes an overhead area and a payload area. Overheads may include but are not limited to at least one of the following: a service frame header indication, a trail trace identifier (trail trace identifier, TTI), an X bit-interleaved parity BIP-X (X Bit-interleaved parity, BIP-X), a backward error indication (backward error indication, BEI), a backward defect indication (backward defect indication, BDI), a status indication (Status, STAT), a timestamp, a sequence identifier, a mapping overhead, and the like. The payload area is used to carry service data. For example, the data unit frame may be 8 bytes (B) or an integer multiple of 16B, for example, 16B, 32B, 64B, 128B, 196B, 256B, or 512B. This is not limited in embodiments of this application.

(3) An OTN frame is used to carry various service data, and can manage and monitor the service data. The OTN frame may be an optical data unit (optical data unit, ODU) k, an ODUCn, an ODUflex, an optical transport unit (optical transport unit, OTU) k, an OTUCn, an optical payload unit (optical payload unit, OPU), a flexible OTN (flexible OTN, FlexO) frame, or the like. The OTN frame may alternatively be an ODU multiframe, an OTU multiframe, an OPU multiframe, or the like. The OTN frame may alternatively be another frame structure applicable to an optical network.

(4) A generic mapping procedure (Generic Mapping Procedure, GMP) is a general mapping procedure of an OTN. Specifically, a Cm value of a quantity of client entities and clock information in each service frame periodicity is generated. Then, a "sigma-delta" algorithm is used to calculate a distribution pattern of client data in a payload area, and an amount of Cm client data is mapped to a corresponding location of the distribution pattern.

A data unit frame may be mapped to an OTN frame in a GMP mapping manner. The data unit frame occupies several slots (tributary slots or timeslots, TSs) that are in the OTN frame

For example, FIG. 3 is a schematic diagram of TS distribution using GMP mapping. In FIG. 3, a GMP OH represents an overhead area. A service container formed by one or more TSs in FIG. 3 is used to transmit an OSU. In FIG. 3, that the OTN frame is an ODU0 is used as an example. The ODU0 includes 119 10M slots. A payload area of the ODU0 is divided into 119 10M slots. A slot interleaved granularity is 16 bytes. In FIG. 3, each block is 16 bytes, and each slot in each ODU frame includes eight 16 bytes. 32 ODU0s form one multiframe. A size of the OSU is an integer multiple of 16 bytes. When the OSU is mapped to the service container, a bit stream of the OSU may be placed from top to bottom of rows and from left to right in each row. After corresponding slots in a row are full, a similar operation is performed in corresponding slots in a next row. As shown in FIG. 3, in an example, the service container occupies three slots, for example, a TS #1, a TS #2, and a TS #k, and a mapping granularity is 16 bytes. The mapping granularity may be referred to as one data block, in other words, a size of one data block is 16 bytes. In this case, after the first row is full in an order of the TS #1, the TS #2, the TS #k, the TS #1, the TS #2, and the TS #k, the bit stream of the OSU is continued to be placed in the second row in the foregoing order.

(5) An asynchronous mapping procedure (asynchronous mapping procedure, AMP) is a mapping procedure of an OTN. In the AMP, a value of a positive justification byte (positive justification opportunity, PJO) or a value of a negative justification byte (negative justification opportunity, NJO) is determined based on a rate of a client side signal, to determine that content in a justification byte is a padding byte or a client signal, and enable a rate of a server layer signal to match a rate of a client layer signal.

Packet service traffic changes irregularly. Therefore, different traffic requirements are met through bandwidth changing of an OSU. In a case of resizing bandwidth of the OSU, resizing of bandwidth, namely, resizing of slots that are in an OTN frame, occupied when the OTN frame carries the OSU is involved. The service container is a space that carries the OSU, and the service container includes a plurality of slots that are in the OTN frame.

In a current lossless bandwidth resize solution (based on a G.HAO protocol), a periodic latency indication is used. As a result, fast bandwidth resizing cannot be implemented. A manner used in a GMP is to adjust one byte every 125 μs, but an adjustment rate is slow in this manner.

Embodiments of this application provide a bandwidth resize method and apparatus. In a bandwidth resize process, a size of a service container is synchronously adjusted as a rate (or bandwidth) of a data unit frame changes. In embodiments of this application, an example in which the data unit frame is an OSU frame is used for description. For ease of description, the OSU frame is referred to as an OSU for short below. The following uses an example in which bandwidth of the OSU changes from first bandwidth to second bandwidth. For example, in a scenario of increasing the bandwidth, the first bandwidth is less than the second bandwidth. In a scenario of decreasing the bandwidth, the first bandwidth is greater than the second bandwidth.

For example, in the scenario of increasing the bandwidth, the first bandwidth corresponds to bandwidth of M slots. The second bandwidth corresponds to bandwidth of M+N slots. In the scenario of decreasing the bandwidth, the first bandwidth corresponds to bandwidth of M slots, and the second bandwidth corresponds to bandwidth of M-N slots. Both M and N are positive integers.

For ease of description, in embodiments of this application, a service container corresponding to the OSU that carries the first bandwidth is referred to as a first service container, and a service container corresponding to the OSU that carries the second bandwidth is referred to as a second service container. In some scenarios, the size of the service container is synchronously adjusted when the bandwidth is resized. For example, the first service container includes the M slots, in the scenario of increasing the bandwidth, the second service container includes the M+N slots, and in the scenario of decreasing the bandwidth, the second service container includes the M-N slots. The first service container may also be understood as an optical service tributary unit.M (optical service Tributary unit.M, OSTU.M), where M represents a quantity of slots. The second service container may be understood as an OSTU.M+N or an OSTU.M-N.

In other scenarios, the size of the service container may be first increased before the bandwidth is increased, or the size of the service container is decreased after the bandwidth is decreased. In other words, the first service container and the second service container may be understood as an OSTU.M+N or an OSTU.M-N.

In embodiments of this application, in a bandwidth resize process, to enable each network node to understand a bandwidth resize location that is in the OSU, it is proposed that a first indication is added to the OSU. The first indication indicates the bandwidth resize location that is in the OSU. The first indication may also be referred to as a rate change indication, a bandwidth change indication, or a bandwidth resize indicate (bandwidth resize indicate, BWR_IND), or may be named by another name. This is not specifically limited in embodiments of this application.

The following first describes a mapping process based on the first indication of each network node on a transmission path.

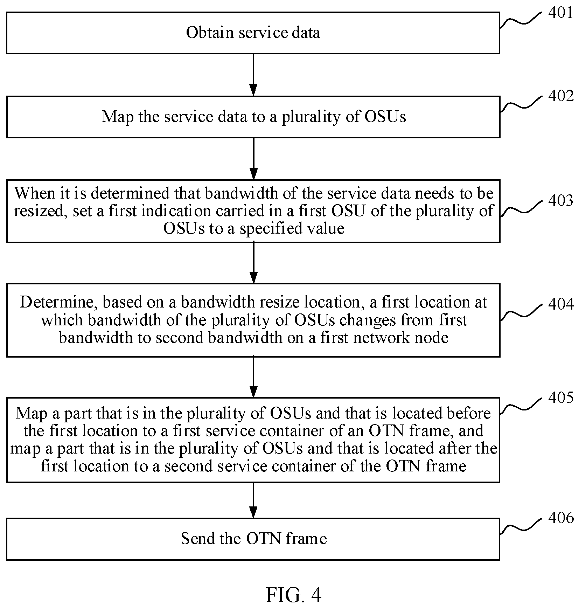

FIG. 4 is a schematic flowchart of a bandwidth resize method according to an embodiment of this application. The bandwidth resize method is applicable to a source node. The source node may also be referred to as the 1st node.

401: Obtain service data.

402: Map the service data to a plurality of OSUs, where payload areas of the plurality of OSUs are used to carry the service data.

Frame overheads of the plurality of OSUs include a first indication. When bandwidth of the service data needs to be resized, bandwidth of the OSU needs to be resized, and this may also be understood as that a rate of the OSU needs to be adjusted. When the bandwidth of the OSU needs to be resized, or before the rate of the OSU changes, the first indication carried in a first OSU of the plurality of OSUs is set to a specified value. When the first indication is the specified value, the first indication indicates a bandwidth resize location that is of the service data and that is in the plurality of OSUs, in other words, indicates a rate adjustment location that is in the plurality of OSUs.

In an example, when a set bit of the first indication changes from 0 to 1, it indicates that the bandwidth needs to be resized. Another bit of the first indication indicates the bandwidth resize location.

In another example, when a value of the first indication changes from 0 to 1, it indicates that the bandwidth needs to be resized. A distance between a bit on which the first indication is located and the bandwidth resize location is a specific distance. Determining of the specific distance is related to a structure of the OSU. For example, different specific distances are configured for different structures of OSUs. Therefore, the bandwidth resize location may be determined based on a location that is of the first indication and that is in the plurality of OSUs and the structure of the OSU.

On this basis, 403 may be performed after 402 is performed.

403: When it is determined that the bandwidth of the service data needs to be resized, set the first indication carried in the first OSU of the plurality of OSUs to the specified value, and when the first indication is the specified value, indicate the bandwidth resize location that is of the service data and that is in the plurality of OSUs.

It should be noted that the location that is of the first indication and that is in the plurality of OSUs is located before the bandwidth resize location.

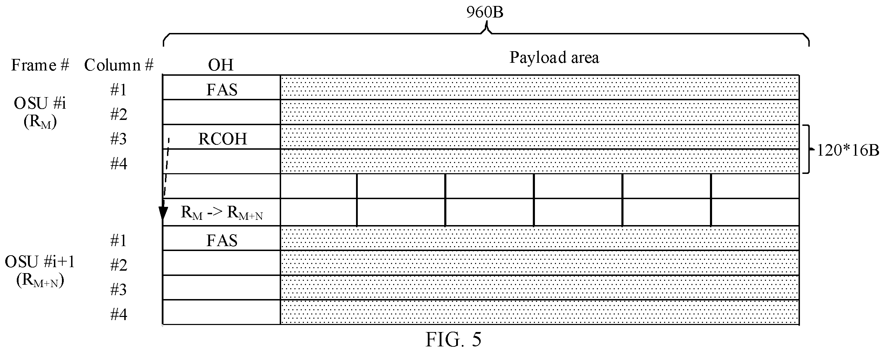

A size of the OSU may be a multiple of 16 bytes. For example, FIG. 5 is a schematic diagram of a possible structure of an OSU according to an embodiment of this application. In FIG. 5, an OSU with four rows and 960-byte columns is used as an example. The OSU includes an overhead area and a payload area. The overhead area of the OSU includes a first indication. For example, the first indication may be classified as a resize control overhead (resize control overhead, RCOH). The RCOH is located in an overhead region of the OSU, for example, four high bits of the eighth byte column in the first to third rows. A distance between a location of the RCOH in an OSU and a start location of a next OSU is $120 \times 16$ bytes. For example, the first indication in the overhead area of the OSU may indicate that bandwidth resizing starts to be performed on the next OSU. A specific size of the OSU and a location of the resize control overheads are not specifically restricted. Locations of resize control overheads in OSUs of different sizes may be different. For the different sizes of the OSUs, a distance between a location x of the first indication and a bandwidth resize location y indicated by the first indication may be different.

404: Determine, based on the bandwidth resize location, a first location at which bandwidth of the plurality of OSUs changes from first bandwidth to second bandwidth on a first network node.

405: Map a part that is in the plurality of OSUs and that is located before the first location to a first service container of an OTN frame, and map a part that is in the plurality of OSUs and that is located after the first location to a second service container of the OTN frame.

406: Send the OTN frame.

For example, the "map a part that is in the plurality of OSUs and that is located before the first location to a first service container of an OTN frame, and map a part that is in the plurality of OSUs and that is located after the first location to a second service container of the OTN frame" may be implemented in the following manners.

The part that is in the plurality of OSUs and that is located before the first location is mapped to M slots of the OTN frame, and the part that is in the plurality of OSUs and that is located after the first location is mapped to M+N slots or M-N slots of the OTN frame.

The first service container includes at least the M slots, the first bandwidth corresponds to bandwidth of the M slots. The second service container includes the M+N slots or includes the M-N slots, and the second bandwidth corresponds to bandwidth of the M+N slots or bandwidth of the M-N slots.

In a possible implementation, in a scenario of increasing the bandwidth, in other words, when the first bandwidth is less than the second bandwidth, before the bandwidth (or the rate) of the OSU is resized (adjusted), each network node may be first indicated to increase a size of a service container. To be specific, the size of the service container increases from the M slots to the M+N slots. Then, network nodes starting from the source node gradually resize the bandwidth of the OSU in a path sequence. In this case, when the first indication is received, bandwidth of the service container is bandwidth obtained through the bandwidth increasing. Further, after the first location is determined, the part that is in the plurality of OSUs and that is located before the first location is mapped to a service container (occupying the M+N slots) obtained through size adjustment of the OTN frame, and the part that is in the plurality of OSUs and that is located after the first location is mapped to a service container (occupying the M+N slots) obtained through size adjustment of the OTN frame.

In an example, in a scenario of decreasing the bandwidth, when the first bandwidth is greater than the second bandwidth, network nodes starting from the source node may start to gradually decrease the bandwidth of the OSU in a path sequence, and then each network node is indicated to decrease the size of the service container. In this case, when the first indication is received, the bandwidth of the service container is still the first bandwidth. Subsequently, the source node may indicate each network node to decrease the size of the service container. Therefore, after the first location is determined, the part that is in the plurality of OSUs and that is located before the first location is mapped to the M slots of the OTN frame, and the part that is in the plurality of OSUs and that is located after the first location is mapped to the M slots of the OTN frame. Then, a specific indication is performed, and network nodes starting from the source node map an OSU received after the specific indication to the M-N slots of the OTN frame.

In another possible implementation, bandwidth of the first service container is the first bandwidth, and bandwidth of the second service container is the second bandwidth. In this implementation, the size of the service container is synchronously adjusted when the bandwidth (a transmission rate) of the OSU is resized (adjusted).

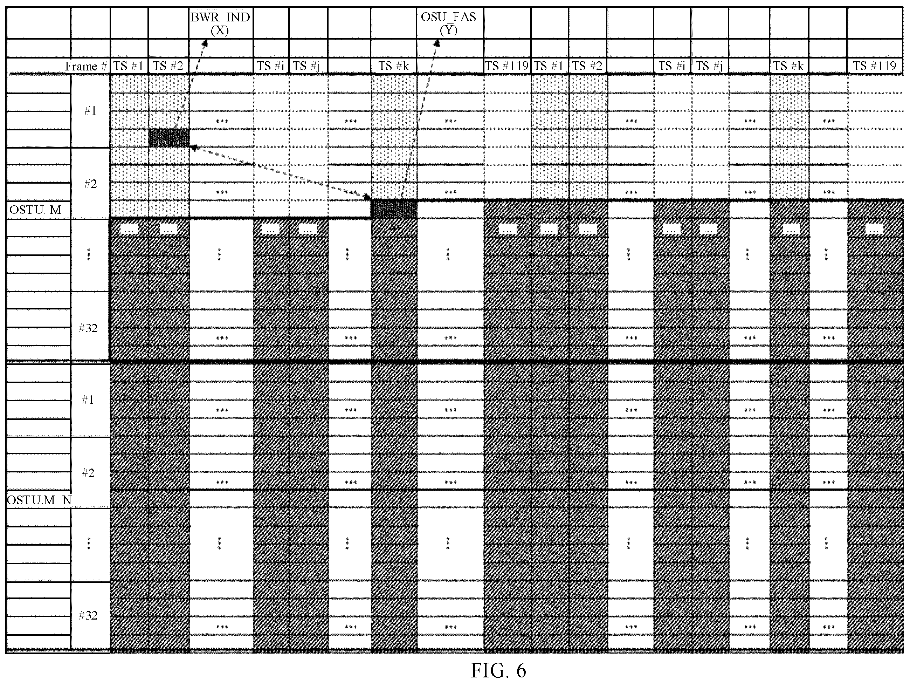

In an example, the OTN frame is an ODU frame. FIG. 6 is a schematic diagram of a service container change according to an embodiment of this application. For example, an ODUO includes 119 10M slots. 32 ODUO frames form one multiframe. A payload area of the multiframe is divided into the 119 10M slots. A slot interleaved granularity is 16 bytes. In FIG. 6, each block is 16 bytes, and each slot includes $256 \times 16$ bytes.

A first service container OSTU.M includes M slots, a size of the first service container OSTU.M is represented by

$P_M$, and the first service container OSTU.M includes M*256×16 bytes. A second service container OSTU.M+N includes M+N slots, and a size of the second service container OSTU.M+N is represented by $P_{M+N}$. The second service container OSTU.M+N includes (M+N)*256×16 bytes. The first service container occupies a TS #1, a TS #2, and a TS #k. The second service container occupies the TS #1, the TS #2, the TS #k, a TS #i, a TS #j, and a TS #119. A filling pattern part of dots in FIG. 6 corresponds to the first service container. When the OSU is mapped to the first service container, a rate of the OSU is $R_M$, which represents M 10M bit rates. A filling pattern part of slashes in FIG. 6 corresponds to the second service container. When the OSU is mapped to the second service container, a rate of the OSU is $R_{M+N}$, which represents (M+N) 10M bit rates.

A GMP mapping manner is used as an example. Before bandwidth changes, the OSU is evenly mapped to the first service container based on $C_m(M)$ information and a sigma-delta algorithm by using a GMP. The size of the first service container is the first (Y-1) 16 bytes of the OSTU.M. $C_m(M)$ represents a quantity of 16 bytes to which the OSU needs to be mapped and that is on the OSTU.M. Y represents a mapping location that corresponds to the first location and that is in a service container, namely, a boundary point between the first service container and the second service container in the OTN frame.

After the bandwidth changes, the OSU is evenly mapped to the second service container based on $C_m(M + N)$ information and the sigma-delta algorithm by using the GMP. When the bandwidth changes, the size of the second service container is the last Z 16 bytes of the OSTU.M+N. $C_m(M + N)$ represents a quantity of 16 bytes to which the OSU needs to be mapped and that is on the OSTU.M+N.

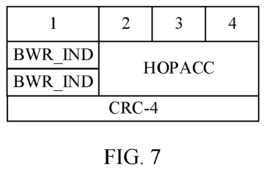

In a possible implementation, when the bandwidth is increased, each network node on a transmission path needs to complete the bandwidth increase in sequence from a source node to a sink node. As a result, a larger quantity of upstream network nodes of a node leads to a longer delay of completing the bandwidth increase on the node. In embodiments of this application, a quantity of upstream network nodes of each network node is indicated based on a second indication before bandwidth resizing. The second indication may also be referred to as hop accumulation (HOPACC), or may be named by another name. This is not specifically limited in embodiments of this application. The second indication indicates a quantity of network nodes that the OSU passes through. The network node that the OSU passes through is a network node that completes mapping of a plurality of data unit frames to the OTN frame at a service layer. For example, the second indication is carried in an overhead area of a first OSU. For example, the second indication is carried in an RCOH of the first OSU. FIG. 7 is a schematic diagram of a structure of an RCOH in an OSU frame according to an embodiment of this application. In some scenarios, the HOPACC may alternatively not be transmitted.

Before mapping at the service layer, each network node first increases a value of the second indication HOPACC by 1. A purpose of increasing the HOPACC by 1 is to adjust an FIFO (First Input First Output, first input first output) apparatus waterline for buffering OSU data on a current network node. Generally, more occupied slots indicate a higher specified waterline. To ensure uninterrupted transmission of a bit stream, a first input first output (First Input First Output, FIFO) apparatus needs to be deployed on the network node to buffer the OSU. For example, the FIFO apparatus may use a buffer manner. When each network node determines, before performing mapping, the first location at which the rate of the OSU actually changes, the network node delays n data block sizes relative to the location at which the input bit stream changes. FIG. 6 is used as an example, and a data block size is 16 bytes. Therefore, delayed n 16-byte OSU data is buffered in the FIFO apparatus, to adjust the FIFO waterline of the current network node.

In this implementation, when the first location is determined based on the first indication, the value of the second indication may be first accumulated by 1, and then the first location is determined based on the bandwidth resize location indicated by the first indication and a value of the adjusted second indication.

For example, the first location meets a condition shown in the following formula (1).

$$W = y + HA * n \quad \text{Formula (1)}$$

W represents the first location, y represents the bandwidth resize location indicated by the first indication, HA represents the value of the second indication, and n is a preset value. For example, n is related to a bandwidth difference between the first bandwidth and the second bandwidth. For example, n may be equal to a difference between a quantity of slots corresponding to the second bandwidth and a quantity of slots corresponding to the first bandwidth. In some scenarios, n may also be equal to 0.

In some scenarios, when the HOPACC does not need to be transmitted, it may be understood that the bandwidth resize location indicated by the first indication is used as the first location, that is, W=y.

The following describes a manner of determining the boundary point between the first service container and the second service container. The boundary point may also be understood as a mapping location to which a rate change location (namely, the first location) of the OSU is mapped and that is on the OTN frame. For example, the boundary point between the first service container and the second service container in the OTN frame may be determined based on the first location, the first bandwidth, and the second bandwidth. Therefore, the part that is in the plurality of OSUs and that is located before the first location is mapped to the first service container of the OTN frame based on the boundary point, and the part that is in the plurality of OSUs and that is located after the first location is mapped to the second service container of the OTN frame based on the boundary point.

For example, the boundary point meets a condition shown in the following formula (2) or formula (3).

$$Y = X + \text{celling}\left(\tfrac{(W-x) \times P}{C_m(M)}\right), \text{ where } X + \text{celling}\left(\tfrac{(W-x) \times P}{C_m(M)}\right) < P \quad \text{Formula (2)}$$

$$Y = X + \text{celling}\left(\tfrac{(W-x) \times P}{C_m(M)}\right) - P, \text{ where } X + \text{celling}\left(\tfrac{(W-x) \times P}{C_m(M)}\right) \geq P \quad \text{Formula (3)}$$

Y represents the boundary point, X represents a mapping location to which the first indication in the first OSU is mapped and that is on the OTN frame, x represents a location of the first indication in the first OSU, W represents the first location, P represents a size of the first service container or a size of the second service container, $C_m(M)$ represents a quantity of data blocks of the OSU before the bandwidth resizing, where the OSU is mapped to a service container of the OTN frame, and celling( ) represents rounding up.

The formula (1), the formula (2), and the formula (3) may be combined and transformed into a formula (4) and a formula (5).

$$Y = X + \text{celling}\left(\tfrac{(y+HA*n-x) \times P}{C_m(M)}\right), \text{ where } X + \text{celling}\left(\tfrac{(y+HA*n-x) \times P}{C_m(M)}\right) < P \quad \text{Formula (4)}$$

$$Y = X + \text{celling}\left(\tfrac{(y+HA*n-x) \times P}{C_m(M)}\right) - P, \text{ where } X + \text{celling}\left(\tfrac{(y+HA*n-x) \times P}{C_m(M)}\right) \geq P \quad \text{Formula (5)}$$

For example, the example in FIG. 6 is still used, and P may be equal to $P_M$ or $P_{M+N}$. $P_M = M*256$, and $P_{M+N} = (M+N)*256$.

After a location of the boundary point is determined, if the size of the second service container OSTU.M+N in the OTN frame is represented as Z when the bandwidth changes, Z meets a condition shown in the following formula (6):

$$Z = P_{M+N} + \text{floor}\left(\tfrac{Y-1}{M}\right) * (M+N) - Y\%M \quad \text{Formula (6)}$$

floor() represents rounding down, and M+N represents a quantity of slots occupied by the second service container in the scenario of increasing the bandwidth.

With reference to the example shown in FIG. 6, when the bandwidth changes, the second service container OSTU.M+N in the OTN frame is of a range of a bold black-line box. To be specific, the size of the second service container OSTU.M+N in the OTN frame is Z data blocks.

Embodiments of this application are applicable to both GMP mapping and asynchronous AMP mapping. For example, the foregoing formula (2) to formula (5) are applicable to the GMP mapping. A principle of determining the boundary point when the AMP mapping is used is similar to a principle of determining the boundary point when the GMP mapping is used. When the AMP is used, when the boundary point may be determined, a quantity of fixed padding data blocks that need to be inserted when the OSU is mapped to the service container may be counted based on y - x or y + HOPACC * n - x. Therefore, proper deformation is performed based on the foregoing formula (2) to formula (5).

In some possible scenarios, some overhead information is transmitted via the OTN frame. An overhead area of the OTN frame includes an overhead region corresponding to each slot in a payload area of the OTN frame.

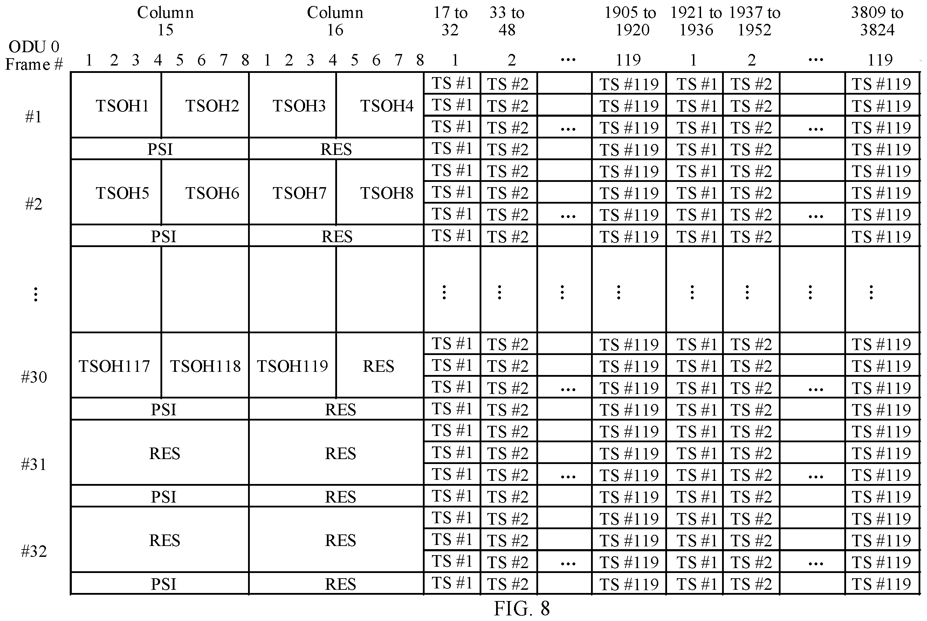

For example, the OTN frame is an ODU0. 32 ODU0s form one multiframe. A payload area of the ODU0 is divided into 119 10M slots, and the slot interleaved granularity is 16 bytes. FIG. 8 is a schematic diagram of ODU0 overhead area distribution according to an embodiment of this application. In FIG. 8, each slot of the ODU0 includes 256 data blocks. A size of each data block is 16 bytes. For example, a 12-bit overhead region is allocated to each slot in the ODU0, for example, may be located in four high bits or four low bits of the 15th column in row 1 to row 3 of the overhead area of the ODU0; or for another example, may be located in four high bits or four low bits of the 16th column of row 1 to row 3 of the overhead area of the ODU0, as shown in FIG. 8. A TSOH represents a slot overhead region. A TSOH 1 to a TSOH 119 respectively correspond to overhead regions of the TS #1 to a TS #119.

For example, the 15th column of the overhead area of the ODU0 may further include a payload structure identifier (payload structure identifier, PSI), and the 16th column may further include a reserved (reserved, RES) bit.

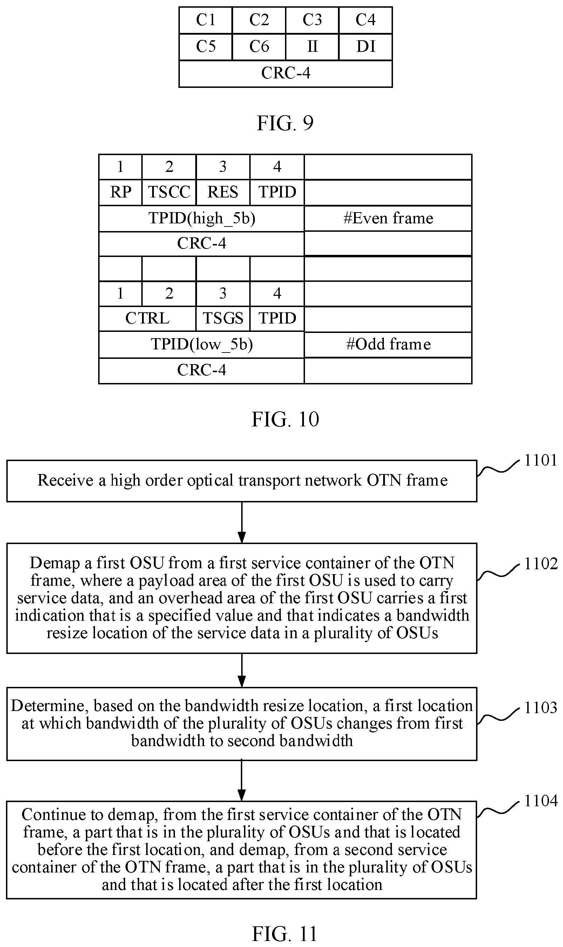

In some embodiments, the overhead information may include a mapping overhead of mapping the OSU to the OTN frame, for example, increment information that is of $C_m$ change and that is transmitted when the GMP mapping is used. When the OSU is mapped to the first service container OSTU.M, a mapping overhead of mapping the OSU to the first service container may be carried in an overhead region of a last slot included in the first service container. FIG. 9 is a schematic diagram of an overhead region of a last slot of a first service container according to an embodiment of this application. CRC-4 in FIG. 9 represents a cyclic redundancy check-4 (cyclic redundancy check). In some embodiments, the plurality of mapping overheads mapped to the first service container may also carry overhead regions of other slots included in the first service container. C1 to C6 represent quantities of OSUs in six bits. II represents an increase indication, and DI represents a decrease indication.

In some embodiments, when the bandwidth is resized, the overhead region may include interaction protocol information needed in a bandwidth resize process. When the bandwidth is increased, the interaction protocol information may be carried in an overhead region corresponding to a to-be-added slot. When the bandwidth is decreased, the interaction protocol information may be carried in an overhead region corresponding to a to-be-deleted slot. For example, the first service container includes at least M slots, and the first bandwidth corresponds to bandwidth of the at least M slots. The second service container includes M+N slots or includes M-N slots, and the second bandwidth corresponds to bandwidth of the M+N slots or bandwidth of the M-N slots. Overhead regions corresponding to N slots of the second service container in the overhead area of the OTN frame are used to carry the interaction protocol information needed for bandwidth resizing.

For example, the interaction protocol information includes at least one of the following:
a resize protocol (resize protocol, RP), tributary slot connectivity check (tributary slot connectivity check, TSCC), a tributary port ID (tributary port ID, TPID), control information (control, CTRL), or a tributary slot group status (tributary slot group status, TSGS).

In addition, a slot overhead region of the ODUO shown in FIG. 8 is used as an example. 32 ODUO frames form a multiframe. For example, five high bits of the RP, the TSCC, and the TPID may be carried in a slot overhead region of an even frame in the multiframe. Five low bits of the CTRL, the TSGS, and the TPID may be carried in a slot overhead region of an odd frame of the multiframe, as shown in FIG. 10. FIG. 10 is a schematic diagram of slot overhead regions respectively corresponding to an even multiframe and an odd multiframe according to an embodiment of this application. In some scenarios, two multiframes (64 ODUO frames) complete one transmission of the interaction protocol information.

The following describes a demapping process of each network node on a transmission path.

FIG. 11 is a schematic flowchart of a bandwidth resize method according to an embodiment of this application. The bandwidth resize method is applicable to an intermediate node or a sink node. There may be one or more intermediate nodes on a transmission path of service data. In some scenarios, the transmission path of the service data may not include the intermediate node.

1101: Receive a higher order optical transport network (OTN) frame, where the OTN frame is used to carry a plurality of data unit frames.

1102: Demap a first OSU from a first service container of the OTN frame, where a payload area of the first OSU is used to carry the service data, and an overhead area of the first OSU carries a first indication that is a specified value and that indicates a bandwidth resize location of the service data in a plurality of OSUs.

1103: Determine, based on the bandwidth resize location, a first location at which bandwidth of the plurality of OSUs changes from first bandwidth to second bandwidth.

A manner of determining the first location is described above, and details are not described herein again.

1104: Continue to demap, from the first service container of the OTN frame, a part that is in the plurality of OSUs and that is located before the first location, and demap, from a second service container of the OTN frame, a part that is in the plurality of OSUs and that is located after the first location.

In some embodiments, determining of a start location of the second service container or a boundary point between the first service container and the second service container is described above, and is not described herein again. Based on this, step 1104 may be specifically implemented in the following manner: The boundary point between the first service container and the second service container in the OTN frame is determined based on the first location, the first bandwidth, and the second bandwidth. Then, the part that is in the plurality of OSUs and that is located before the first location continues to be demapped from the first service container of the OTN frame based on the boundary point, and the part that is in the plurality of OSUs and that is located after the first location is demapped from the second service container of the OTN frame based on the boundary point.

In some embodiments, when a network node that performs the bandwidth resize method is a sink node, after performing step 1104, the sink node may demap the service data from the plurality of OSUs.

In some other embodiments, when the network node that performs the bandwidth resize method is an intermediate node, after performing step 1104, the intermediate node further continues to perform the mapping process, re-determines the first location based on the bandwidth resize location, maps the part that is in the plurality of OSUs and that is located before the first location to the first service container of the OTN frame, and maps the part that is in the plurality of OSUs and that is located after the first location to the second service container of the OTN frame. The OTN frame is sent. A process in which the intermediate node maps the OSU to the OTN is similar to a process in which the first node maps the OSU to the OTN. For example, refer to step 404 and step 405.

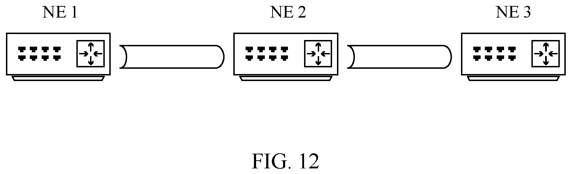

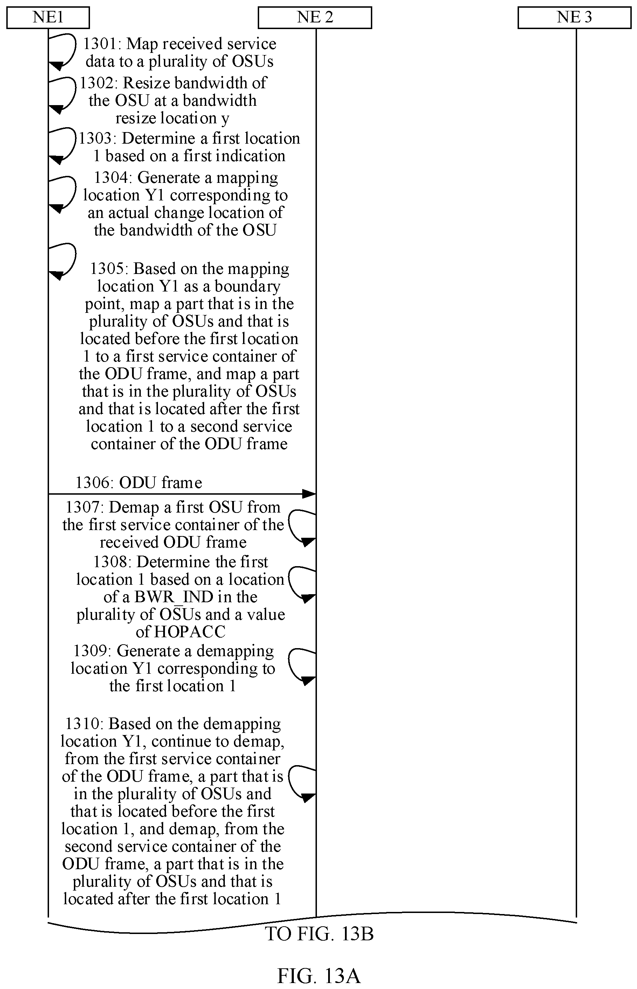

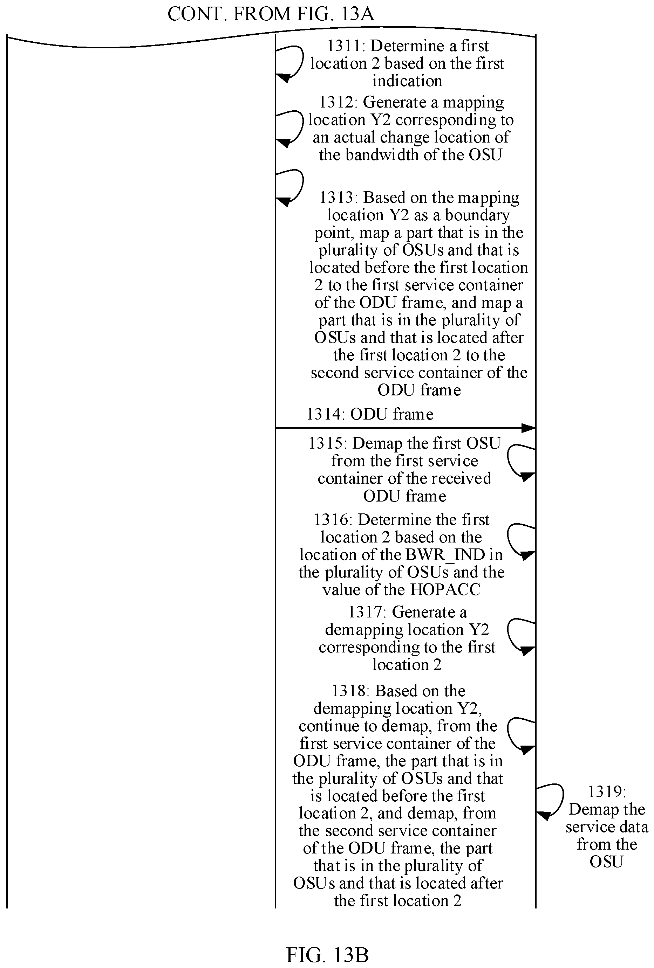

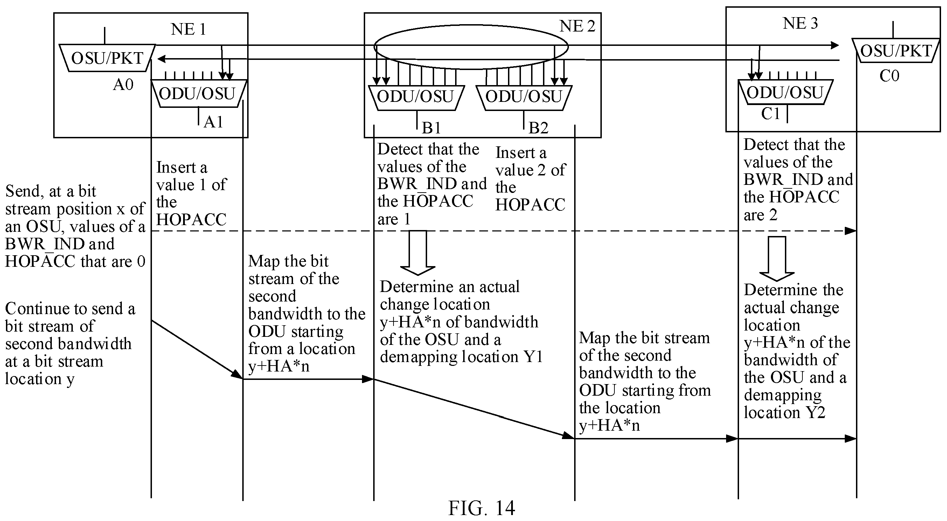

The following describes in detail a procedure of a bandwidth resize method provided in embodiments of this application with reference to FIG. 12, FIG. 13A and FIG. 13B, and FIG. 14. FIG. 12 is a schematic diagram of a transmission path of service data according to an embodiment of this application. A service path includes a source node NE 1, an intermediate node NE 2, and a sink node NE 3. The service path may include the intermediate node or may not include the intermediate node. In FIG. 12, that only one intermediate node is included is used as an example. FIG. 13A and FIG. 13B are schematic flowcharts of a bandwidth resize method in a scenario of increasing bandwidth according to an embodiment of this application. FIG. 14 is a schematic diagram of an end-to-end bandwidth resize procedure according to an embodiment of this application. Specific bandwidth resize steps may be implemented by a processor, a chip, a chip system, a module with a processing function, or the like on the network node.

Processing of the source node NE 1 includes A0 processing and A1 processing. In some embodiments, the A0 processing may include step 1301 and step 1302.

1301: The NE 1 maps received service data to a plurality of OSUs.

The NE 1 may receive a bandwidth resize indicate sent by a network management device or a client device, and determine that a rate of the OSU is adjusted from the first bandwidth to the second bandwidth. A rate corresponding to the first bandwidth is $R_M$. A rate corresponding to the second bandwidth is $R_{M+N}$.

Before the rate of the OSU is about to change, the NE 1 sets a first indication in the to-be-mapped OSU to a specified value. Herein, that the first indication is referred to as the BWR_IND is used as an example. A location of the BWR_IND in the OSU is x. The BWR_IND is the specified value, and indicates a bandwidth resize location y.

For ease of distinguishing, an OSU in which the first indication is set to the specified value and that is in the plurality of OSUs is referred to as a first OSU. Optionally, a second indication is further added to the first OSU. Herein, that the first indication is referred to as the HOPACC is used as an example, and HOPACC=0. The HOPACC records a quantity of network nodes that the OSU passes through.

Before the bandwidth resize location y in the plurality of OSUs, bandwidth is first bandwidth, and starting from the bandwidth resize location y, the bandwidth becomes second bandwidth.

1302: The NE 1 resizes bandwidth (or adjusts a bit stream rate) of the OSU at the bandwidth resize location y. For example, after the BWR_IND, the rate of the OSU is adjusted from $R_M$ to $R_{M+N}$ at a start location of an OSU frame next to the BWR_IND. For example, the BWR_IND is carried in an OSU #i frame, and in the OSU #i frame and before the OSU #i frame, the rate of the OSU is $R_M$, and the bandwidth of the OSU is the first bandwidth. After the OSU #i frame, the rate of the OSU is $R_{M+N}$, and the bandwidth of the OSU is the second bandwidth.

The A1 processing includes step 1303 and step 1304. The A1 processing is used to map the OSU to an output OTN frame. For example, the OTN frame is an ODU frame herein.

1303: Determine a first location 1, to be specific, an actual change location of the bandwidth of the bit stream of the OSU, based on the first indication. A manner of determining the first location 1 is described above, and details are not described herein again.

Specifically, the NE 1 accumulates a value of the HOPACC by 1, the value of the HOPACC is 1, and the HOPACC is re-inserted into the first OSU. For example, if the value of the HOPACC is represented as HA, the actual change location of the bandwidth is y+HA*n=y+1*n.

In some scenarios, when the OSU does not include the second indication, in other words, the operation of accumulating the HOPACC by 1 does not need to be performed, the first location 1 is the bandwidth resize location indicated by the first indication.

1304: Generate a mapping location Y1 corresponding to an actual change location of the bandwidth of the OSU. A manner of determining the mapping location Y1 is described above, and details are not described herein again.

1305: Map, based on the mapping location Y1 as the boundary point, a part that is in the plurality of OSUs and that is located before the first location 1 to a first service container (OSTU.M) of the ODU frame, and map, based on the mapping location Y1 as the boundary point, a part that is in the plurality of OSUs and that is located after the first location 1 to a second service container (OSTU.M+N) of the ODU frame.

1306: Send the ODU frame to the NE 2.

Processing of the intermediate node NE 2 includes B1 processing and B2 processing. The B1 processing includes demapping the OSU from the ODU frame. The B2 processing includes mapping the demapped OSU to the ODU frame.

For example, the B1 processing includes step 1307 to step 1310.

1307: Demap the first OSU from the first service container of the received ODU frame.

The NE 2 detects the BWR_IND from the OSU carried in the received ODU frame. The BWR_IND changes from 0 to 1. Based on the BWR_IND, it is determined that the rate of the OSU is about to change at the location y. For example, the BWR_IND is detected from the first OSU.

Optionally, the value of the HOPACC is obtained from the first OSU. Herein, the value of the HOPACC is 1.

1308: Determine the first location 1 based on the location of the BWR_IND in the plurality of OSUs and the value of the HOPACC. The first location 1 determined by the NE 2 in the demapping process is the first location 1 used when the NE 1 performs mapping, that is, the first location is y+HA*n=y+1*n

In some scenarios, when the OSU does not include the second indication, the first location 1 is the bandwidth resize location y indicated by the first indication.

1309: Generate a demapping location Y1 corresponding to the first location 1.

1310: Based on the demapping location Y1, continue to demap, from the first service container (OSTU.M) of the ODU frame, the part that is in the plurality of OSUs and that is located before the first location 1, and demap, from the second service container (OSTU.M+N) of the ODU frame, the part that is in the plurality of OSUs and that is located after the first location 1.

For example, different demapping processes are performed based on the demapping location Y1 as the boundary point. Before a rate change location of the OSU, an OSU before the rate change is demapped from the first service container (OSTU.M), and after the rate change location of the OSU, an OSU after the rate change is demapped from the second service container (OSTU.M+N).

For example, the B2 processing includes step 1311 to step 1314. The B2 processing is used to map the OSU to the output ODU frame.

1311: Determine a first location 2, to be specific, the actual change location of the bandwidth of the OSU, based on the first indication. A manner of determining the first location 2 is described above, and details are not described herein again.

Specifically, the NE 1 accumulates the value of the HOPACC by 1, the value of the HOPACC is updated to 2, and the HOPACC is re-inserted into the first OSU. In this case, the actual change location of the bandwidth is y+HA*n=y+2*n.

1312: Generate a mapping location Y2 corresponding to the actual change location of the bandwidth of the OSU. A manner of determining the mapping location Y2 is described above, and details are not described herein again.

In some scenarios, when the OSU does not include the second indication, in other words, the operation of accumulating the HOPACC by 1 does not need to be performed, the first location 2 is the bandwidth resize location y indicated by the first indication, and the mapping location Y2 is the same as the mapping location Y1.

1313: Based on the mapping location Y2 as a boundary point, map a part that is in the plurality of OSUs and that is located before the first location 2 to the first service container (OSTU.M) of the ODU frame, and map a part that is in the plurality of OSUs and that is located after the first location 2 to the second service container (OSTU.M+N) of the ODU frame.

1314: Send the ODU frame to the NE 3.

Processing of the sink node NE 3 includes C1 processing and C0 processing. The C1 processing includes demapping the OSU from the ODU frame. The C0 processing includes demapping the service data from the OSU frame.

For example, the C1 processing includes step 1315 to step 1318.

1315: Demap the first OSU from the first service container of the received ODU frame.

The NE 3 detects the BWR_IND from the OSU carried in the received ODU frame. The BWR_IND changes from 0 to 1, and indicates that the rate of the OSU is about to change at the location y. For example, the BWR_IND is detected from the first OSU.

Optionally, the value of the HOPACC is obtained from the first OSU. Herein, the value HA of the HOPACC is 2.

1316: Determine a first location 2 based on the location of the BWR_IND in the plurality of OSUs and the value of the HOPACC. The first location 2 determined by the NE 2 in the demapping process is the first location 2 used when the NE 1 performs mapping, that is, the first location 2 is y+HA*n=y+2*n.

1317: Generate a demapping location Y2 corresponding to the first location 2.

In some scenarios, when the OSU does not include the second indication, the first location 2 is the bandwidth resize location y indicated by the first indication, and the mapping location Y2 is the same as the mapping location Y1.

1318: Based on the demapping location Y2, continue to demap, from the first service container (OSTU.M) of the ODU frame, the part that is in the plurality of OSUs and that is located before the first location 2, and demap, from the second service container (OSTU.M+N) of the ODU frame, the part that is in the plurality of OSUs and that is located after the first location 2.

For example, different demapping processes are performed based on the demapping location Y2 as the boundary point. Before the rate change location of the OSU, an OSU before the rate change is demapped from the first service container (OSTU.M), and after the rate change location of the OSU, an OSU after the rate change is demapped from the second service container (OSTU.M+N).

The C0 processing includes step 1319: Demap the service data from the OSU.

An embodiment of this application further provides a system. The system includes a source node and a sink node, and may further include an intermediate node.

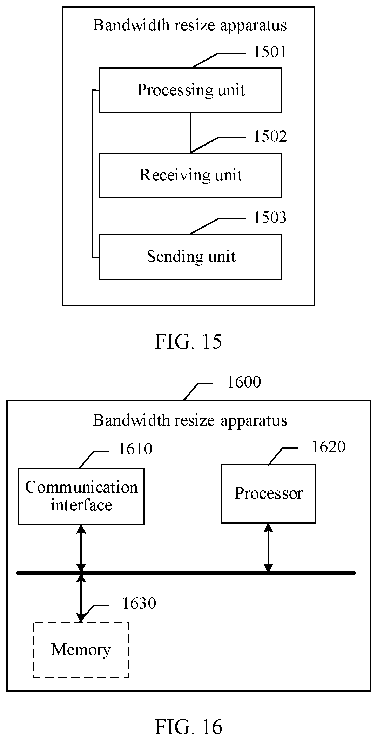

An embodiment of this application further provides a bandwidth resize apparatus. The method, the apparatus, and the system are based on a same inventional concept. The method, the apparatus, and the system have similar principles for resolving problems. Therefore, for embodiments of the apparatus and the method, refer to each other, and details are not repeated herein. The apparatus may be used in an OTN device, and the apparatus may be specifically a processor, a chip, a chip system, a module in a processor, or the like in the OTN device. The apparatus may be implemented by a tributary board and/or a circuit board in FIG. 2. FIG. 15 is a schematic diagram of a structure of a possible bandwidth resize apparatus according to an embodiment of this application. As shown in FIG. 15, the apparatus includes a processing unit 1501, a receiving unit 1502, and a sending unit 1503. The processing unit 1501 is configured to: perform the bandwidth resize method according to any one of the foregoing embodiments, for example, perform a mapping operation or a demapping operation, for example, perform operations of step 402 to step 405, and for another example, perform operations of step 1102 to step 1104. The receiving unit 1502 is configured to perform a receiving action of the network node in any one of the foregoing embodiments, for example, receive an OTN frame or receive service data. The sending unit 1503 is configured to perform a sending action of the network node in any one of the foregoing embodiments, for example, send the OTN frame. Optionally, the foregoing three units may further perform other related optional steps performed by the network device mentioned in any one of the foregoing embodiments, and details are not described herein again.

In this embodiment of this application, unit division in this embodiment of this application is an example, and is merely logical function division. In actual implementation, there may be another division manner. In addition, functional units in this embodiment of this application may be integrated into one processor, or each of the units may exist alone physically, or two or more units are integrated into one unit. The integrated unit may be implemented in a form of hardware, or may be implemented in a form of a software functional unit.

FIG. 16 is a schematic diagram of a structure of another possible bandwidth resize apparatus according to an embodiment of this application. As shown in FIG. 16, an apparatus 1600 includes a communication interface 1610 and a processor 1620. The apparatus 1600 may be used in an OTN device. The apparatus 1600 may further include a memory 1630.

The processing unit 1501, the receiving unit 1502, and the sending unit 1503 shown in FIG. 15 may all be implemented by the processor 1620. For example, the processor 1620 may be a signal processor in a line board and/or a signal processor in a tributary board shown in FIG. 2. The processor 1620 receives and sends an OTN frame or service data by using the communication interface 1610, and is configured to implement the method performed by the network node (the source node, the intermediate node, or the sink node) in FIG. 4, FIG. 11, FIG. 13A and FIG. 13B, or FIG. 14. In an implementation process, each step of the processing procedure may complete the method performed by the network node in FIG. 4, FIG. 11, FIG. 13A and FIG. 13B, or FIG. 14 by using instructions in a form of software or an integrated logic circuit of hardware in the processor 1620.

The communication interface 1610 may be a circuit, a bus, a transceiver, or any other apparatus that may be configured to exchange information. For example, the another apparatus may be a device connected to the apparatus 1600. For example, the another apparatus may be a client device or another OTN device.

The processor 1620 may be a general-purpose processor, a digital signal processor, an application-specific integrated circuit, a field programmable gate array or another programmable logic device, a discrete gate or transistor logic device, or a discrete hardware component. The general-purpose processor may be a microprocessor, any conventional processor, or the like. The steps of the methods disclosed with reference to embodiments of this application may be directly performed by a hardware processor, or may be performed by using a combination of hardware in the processor and a software unit. Program code executed by the processor 1620 to implement the foregoing method may be stored in the memory 1630. The memory 1630 is coupled to the processor 1620. The coupling in this embodiment of this application may be an indirect coupling or a communication connection between apparatuses, units, or modules. The coupling may be implemented in electronic, mechanical, and other forms, and is used for information exchange between the apparatuses, the units, or the modules. The processor 1620 may cooperate with the memory 1630. The memory 1630 may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory 1630 is any other medium that can be configured to carry or store program code in a form of instructions or a data structure and that can be accessed by a computer, but is not limited thereto.

A specific connection medium between the communication interface 1610, the processor 1620, and the memory 1630 are not limited in this embodiment of this application. In this embodiment of this application, in FIG. 16, the memory 1630, the processor 1620, and the communication interface 1610 are connected through a bus. The bus is represented by a thick line in FIG. 16, and a connection manner between other components is merely described as an example, and is not limited thereto. The bus may be classified into an address bus, a data bus, a control bus, and the like. For ease of indication, the bus is indicated by using only one bold line in FIG. 16. However, it does not indicate that there is only one bus or only one type of bus.

Based on the foregoing embodiments, an embodiment of this application further provides a computer storage medium. The storage medium stores a software program, and when read and executed by one or more processors, the software program may implement the methods method provided by any one or more of the foregoing embodiments. The computer storage medium may include any medium that can store program code, for example, a USB flash drive, a removable hard disk, a read-only memory, or a random-access memory.

Based on the foregoing embodiments, an embodiment of this application further provides a chip. The chip includes a processor, configured to implement functions in any one or more of the foregoing embodiments, for example, receiving, sending, or processing the protocol frame in the foregoing method. Optionally, the chip further includes a memory, and the memory is configured to execute program instructions and data necessary for the processor. The chip may include a chip, or may include a chip and another discrete device.

An embodiment of this application provides a computer-readable medium, configured to store a computer program. The computer program includes instructions used to perform the method steps in the method embodiment corresponding to FIG. 4, FIG. 11, FIG. 13A and FIG. 13B, or FIG. 14.

Persons skilled in the art should understand that embodiments of this application may be provided as a method, a system, or a computer program product. Therefore, this application may use a form of a hardware-only embodiment, a software-only embodiment, or an embodiment with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of another programmable data processing device generate an apparatus for implementing a specific function in one or more procedures in the flowcharts and/or in one or more blocks in the block diagrams.

It is clear that, persons skilled in the art can make various modifications and variations to this application without departing from the scope of this application. In this way, this application is intended to cover these modifications and variations of this application provided that they fall within the scope of the claims of this application and their equivalent technologies.

**Claims**

1. A bandwidth resize method, wherein the method comprises:

   carrying a first indication in overheads of a first data unit frame, wherein the first indication indicates a bandwidth resize location of the first data unit frame; and
   mapping partial bytes that are in the first data unit frame and that are located before the bandwidth resize location to a first service container of a second data unit frame, and mapping partial bytes that are in the first data unit frame and that are located after the bandwidth resize location to a second service container of the second data unit frame, wherein a quantity of slots occupied by the first service container and a quantity of slots occupied by the second service container in the second data unit frame are different.

2. The method according to claim 1, wherein a location to which the first indication is mapped and that is on the second data unit frame is X, a location to which a byte on the bandwidth resize location is mapped and that is on the second data unit frame is Y, and Y is related to X.

3. The method according to claim 1 or 2, wherein the first indication is a bandwidth resize indicate BWR_IND.

4. The method according to claim 3, wherein the BWR_IND is 1, and indicates that a rate of the first data unit frame needs to be adjusted.

5. The method according to any one of claims 1 to 4, wherein both the first data unit frame and the second data unit frame are optical transport network OTN frames.

6. The method according to any one of claims 1 to 5, wherein the mapping partial bytes that are in the first data unit frame and that are located before the bandwidth resize location to a first service container of a second data unit frame, and mapping partial bytes that are in the first data unit frame and that are located after the bandwidth resize location to a second service container of the second data unit frame comprises:
   mapping the partial bytes that are in the first data unit frame and that are located before the bandwidth resize location to M slots of the second data unit frame, and mapping the partial bytes that are in the first data unit frame and that are located after the bandwidth resize location to M+N slots or M-N slots of the second data unit frame.

7. The method according to any one of claims 1 to 6, wherein an overhead area of the second data unit frame comprises an overhead region corresponding to each slot in a payload area of the second data unit frame, and an overhead region of a last slot comprised in the first service container carries a mapping overhead of mapping the first data unit frame to the first service container.

8. The method according to any one of claims 1 to 7, wherein the first service container comprises the M slots, the second service container comprises the M+N slots or the M-N slots, the overhead area of the second data unit frame comprises the overhead region corresponding to each slot in the payload area of the second data unit frame, and overhead regions corresponding to N slots are used to carry interaction information of bandwidth resizing.

9. The method according to claim 8, wherein the interaction information comprises one or more of a resize protocol RP, tributary slot connectivity check TSCC, a tributary port identifier TPID, control information CTRL, and a tributary slot group status TSGS.

10. A bandwidth resize method, wherein the method comprises:

   receiving a second data unit frame, and demapping a first data unit frame from the second data unit frame;
   demapping a first indication from overheads of the first data unit frame, wherein the first indication indicates a bandwidth resize location of the first data unit frame; and
   demapping, from a first service container of the second data unit frame, partial bytes that are in the first data unit frame and that are located before the bandwidth resize location; and demapping, from a second service container of the second data unit frame, partial bytes that are in the first data unit frame and that are located after the bandwidth resize location, wherein a quantity of slots occupied by the first service container and a quantity of slots occupied by the second service container in the second data unit frame are different.

11. The method according to claim 10, wherein the first indication is demapped from a location X of the second data unit frame, a byte on the bandwidth resize location is demapped from a location Y of the second data unit frame, and Y is related to X.

12. The method according to claim 10 or 11, wherein the first indication is a bandwidth resize indicate BWR_IND.

13. The method according to claim 12, wherein the BWR_IND is 1, and indicates that a rate of the first data unit frame needs to be adjusted.

14. The method according to any one of claims 10 to 13, wherein both the first data unit frame and the second data unit frame are optical transport network OTN frames.

15. The method according to any one of claims 10 to 14, wherein the demapping, from a first service container of the second data unit frame, partial bytes that are in the first data unit frame and that are located before the bandwidth resize location; and demapping, from a second service container of the second data unit frame, partial bytes that are in the first data unit frame and that are located after the bandwidth resize location comprises:
demapping, from M slots of the second data unit frame, the partial bytes that are in the first data unit frame and that are located before the bandwidth resize location, and demapping, from M+N slots or M-N slots of the second data unit frame, the partial bytes that are in the first data unit frame and that are located after the bandwidth resize location.

16. The method according to any one of claims 10 to 15, wherein an overhead area of the second data unit frame comprises an overhead region corresponding to each slot in a payload area of the second data unit frame, and an overhead region of a last slot comprised in the first service container carries a mapping overhead of mapping the first data unit frame to the first service container.

17. The method according to any one of claims 10 to 16, wherein the first service container comprises the M slots, the second service container comprises the M+N slots or the M-N slots, the overhead area of the second data unit frame comprises the overhead region corresponding to each slot in the payload area of the second data unit frame, and overhead regions corresponding to N slots are used to carry interaction information of bandwidth resizing.

18. The method according to claim 17, wherein the interaction information comprises one or more of a resize protocol RP, tributary slot connectivity check TSCC, a tributary port identifier TPID, control information CTRL, and a tributary slot group status TSGS.

19. A bandwidth resize apparatus, wherein the apparatus comprises:

an overhead generation unit, configured to generate a first indication, wherein the first indication is carried in overheads of a first data unit frame, and the first indication indicates a bandwidth resize location of the first data unit frame, and
a mapping unit, configured to: map partial bytes that are in the first data unit frame and that are located before the bandwidth resize location to a first service container of a second data unit frame, and map partial bytes that are in the first data unit frame and that are located after the bandwidth resize location to a second service container of the second data unit frame, wherein a quantity of slots occupied by the first service container and a quantity of slots occupied by the second service container in the second data unit frame are different.

20. The apparatus according to claim 19, wherein a location to which the first indication is mapped and that is on the second data unit frame is X, a location to which a byte on the bandwidth resize location is mapped and that is on the second data unit frame is Y, and Y is related to X.

21. The apparatus according to claim 19 or 20, wherein the first indication is a bandwidth resize indicate BWR_IND.

22. The apparatus according to claim 21, wherein the BWR_IND is 1, and indicates that a rate of the first data unit frame needs to be adjusted.

23. The apparatus according to any one of claims 19 to 22, wherein both the first data unit frame and the second data unit frame are optical transport network OTN frames.

24. The apparatus according to any one of claims 19 to 23, wherein the mapping unit is configured to:
map the partial bytes that are in the first data unit frame and that are located before the bandwidth resize location to M slots of the second data unit frame, and map the partial bytes that are in the first data unit frame and that are located after the bandwidth resize location to M+N slots or M-N slots of the second data unit frame.

25. The apparatus according to any one of claims 19 to 24, wherein an overhead area of the second data unit frame comprises an overhead region corresponding to each slot in a payload area of the second data unit frame, and an overhead region of a last slot comprised in the first service container carries a mapping overhead of mapping the first data unit frame to the first service container.

26. The apparatus according to any one of claims 19 to 25, wherein the first service container comprises the M slots, the second service container comprises the M+N slots or the M-N slots, the overhead area of the second data unit frame comprises the overhead region corresponding to each slot in the payload area of the second data unit frame, and overhead regions corresponding to N slots are used to carry interaction information of bandwidth resizing.

27. The apparatus according to claim 26, wherein the interaction information comprises one or more of a resize protocol RP, tributary slot connectivity check TSCC, a tributary port identifier TPID, control information CTRL, and a tributary slot group status TSGS.

28. A bandwidth resize apparatus, wherein the apparatus comprises:

a receiving unit, configured to receive a second data unit frame; and
a demapping unit, configured to demap a first data unit frame from the second data unit frame, wherein
the demapping unit is configured to demap a first indication from overheads of the first data unit frame, wherein the first indication indicates a bandwidth resize location of the first data unit frame; and
the demapping unit is configured to: demap, from a first service container of the second data unit frame, partial bytes that are in the first data unit frame and that are located before the bandwidth resize location; and demap, from a second service container of the second data unit frame, partial bytes that are in the first data unit frame and that are located after the bandwidth resize location, wherein a quantity of slots occupied by the first service container and a quantity of slots occupied by the second service container in the second data unit frame are different.

29. The apparatus according to claim 28, wherein the demapping unit is configured to: demap the first indication from a location X of the second data unit frame, and demap the byte on the bandwidth resize location from a location Y of the second data unit frame, wherein Y is related to X.

**30.** The apparatus according to claim 28 or 29, wherein the first indication is a bandwidth resize indicate BWR_IND.

**31.** The apparatus according to claim 30, wherein the BWR_IND is 1, and indicates that a rate of the first data unit frame needs to be adjusted.

**32.** The apparatus according to any one of claims 28 to 31, wherein both the first data unit frame and the second data unit frame are optical transport network OTN frames.

**33.** The apparatus according to any one of claims 28 to 32, wherein the demapping unit is configured to:
demap, from M slots of the second data unit frame, the partial bytes that are in the first data unit frame and that are located before the bandwidth resize location, and demap, from M+N slots or M-N slots of the second data unit frame, the partial bytes that are in the first data unit frame and that are located after the bandwidth resize location.

**34.** The apparatus according to any one of claims 28 to 33, wherein an overhead area of the second data unit frame comprises an overhead region corresponding to each slot in a payload area of the second data unit frame, and an overhead region of a last slot comprised in the first service container carries a mapping overhead of mapping the first data unit frame to the first service container.

**35.** The apparatus according to any one of claims 28 to 34, wherein the first service container comprises the M slots, the second service container comprises the M+N slots or the M-N slots, the overhead area of the second data unit frame comprises the overhead region corresponding to each slot in the payload area of the second data unit frame, and overhead regions corresponding to N slots are used to carry interaction information of bandwidth resizing.

**36.** The apparatus according to claim 35, wherein the interaction information comprises one or more of a resize protocol RP, tributary slot connectivity check TSCC, a tributary port identifier TPID, control information CTRL, and a tributary slot group status TSGS.

**37.** A chip, wherein the chip is connected to a memory, and is configured to read and execute program code stored in the memory, to implement the method according to any one of claims 1 to 9.

**38.** A chip, wherein the chip is connected to a memory, and is configured to read and execute program code stored in the memory, to implement the method according to any one of claims 10 to 18.

FIG. 1

FIG. 2

| Column\\Row | 15 and 16 | 17 to 32 | 33 to 48 | | | | 1905 to 1920 | 1921 to 1936 | 1937 to 1952 | | | 3809 to 3824 |
|---|---|---|---|---|---|---|---|---|---|---|---|---|
| 1 | | | | | | | | | | | | |
| 2 | OH | TS #1 | TS #2 | ... | TS #k | ... | TS #119 | TS #1 | TS #2 | ... | TS #k | ... TS #119 |
| 3 | | | | | | | | | | | | |
| 4 | | | | | | | | | | | | |

FIG. 3

| Obtain service data | 401 |

| Map the service data to a plurality of OSUs | 402 |

| When it is determined that bandwidth of the service data needs to be resized, set a first indication carried in a first OSU of the plurality of OSUs to a specified value | 403 |

| Determine, based on a bandwidth resize location, a first location at which bandwidth of the plurality of OSUs changes from first bandwidth to second bandwidth on a first network node | 404 |

| Map a part that is in the plurality of OSUs and that is located before the first location to a first service container of an OTN frame, and map a part that is in the plurality of OSUs and that is located after the first location to a second service container of the OTN frame | 405 |

| Send the OTN frame | 406 |

FIG. 4

960B

Frame #    Column #        OH                    Payload area

OSU #i          #1          FAS
($R_M$)         #2

                #3          RCOH                                                      120*16B
                #4

                            $R_M \rightarrow R_{M+N}$

OSU #i+1        #1          FAS
($R_{M+N}$)     #2

                #3

                #4

FIG. 5

FIG. 6

| 1 | 2 | 3 | 4 |
|---|---|---|---|
| BWR_IND | HOPACC | | |
| BWR_IND | | | |
| CRC-4 | | | |

FIG. 7

FIG. 8

| ODU 0 Frame # | Column 15 | | | | | | | | Column 16 | | | | | | | | 17 to 32 | 33 to 48 | ... | 1905 to 1920 | 1921 to 1936 | 1937 to 1952 | ... | 3809 to 3824 |
|---|---|---|---|---|---|---|---|---|---|---|---|---|---|---|---|---|---|---|---|---|---|---|---|---|
| | 1 | 2 | 3 | 4 | 5 | 6 | 7 | 8 | 1 | 2 | 3 | 4 | 5 | 6 | 7 | 8 | 1 | 2 | ... | 119 | 1 | 2 | ... | 119 |
| #1 | TSOH1 | | TSOH2 | | TSOH3 | | | | TSOH4 | | | | | | | | TS #1 | TS #2 | | TS #119 | TS #1 | TS #2 | | TS #119 |
| | | | | | | | | | | | | | | | | | TS #1 | TS #2 | | TS #119 | TS #1 | TS #2 | | TS #119 |
| | | | | | | | | | | | | | | | | | TS #1 | TS #2 | ... | TS #119 | TS #1 | TS #2 | ... | TS #119 |
| | PSI | | | | | | | | RES | | | | | | | | TS #1 | TS #2 | | TS #119 | TS #1 | TS #2 | | TS #119 |
| #2 | TSOH5 | | TSOH6 | | TSOH7 | | | | TSOH8 | | | | | | | | TS #1 | TS #2 | | TS #119 | TS #1 | TS #2 | | TS #119 |
| | | | | | | | | | | | | | | | | | TS #1 | TS #2 | | TS #119 | TS #1 | TS #2 | | TS #119 |
| | | | | | | | | | | | | | | | | | TS #1 | TS #2 | ... | TS #119 | TS #1 | TS #2 | ... | TS #119 |
| | PSI | | | | | | | | RES | | | | | | | | TS #1 | TS #2 | | TS #119 | TS #1 | TS #2 | | TS #119 |
| ⋮ | | | | | | | | | | | | | | | | | ⋮ | ⋮ | ⋮ | ⋮ | ⋮ | ⋮ | ⋮ | ⋮ |
| #30 | TSOH117 | | TSOH118 | | TSOH119 | | | | RES | | | | | | | | TS #1 | TS #2 | | TS #119 | TS #1 | TS #2 | | TS #119 |
| | | | | | | | | | | | | | | | | | TS #1 | TS #2 | | TS #119 | TS #1 | TS #2 | | TS #119 |
| | | | | | | | | | | | | | | | | | TS #1 | TS #2 | ... | TS #119 | TS #1 | TS #2 | ... | TS #119 |
| | PSI | | | | | | | | RES | | | | | | | | TS #1 | TS #2 | | TS #119 | TS #1 | TS #2 | | TS #119 |
| #31 | RES | | | | | | | | RES | | | | | | | | TS #1 | TS #2 | | TS #119 | TS #1 | TS #2 | | TS #119 |
| | | | | | | | | | | | | | | | | | TS #1 | TS #2 | | TS #119 | TS #1 | TS #2 | | TS #119 |
| | | | | | | | | | | | | | | | | | TS #1 | TS #2 | ... | TS #119 | TS #1 | TS #2 | ... | TS #119 |
| | PSI | | | | | | | | RES | | | | | | | | TS #1 | TS #2 | | TS #119 | TS #1 | TS #2 | | TS #119 |
| #32 | RES | | | | | | | | RES | | | | | | | | TS #1 | TS #2 | | TS #119 | TS #1 | TS #2 | | TS #119 |
| | | | | | | | | | | | | | | | | | TS #1 | TS #2 | | TS #119 | TS #1 | TS #2 | | TS #119 |
| | | | | | | | | | | | | | | | | | TS #1 | TS #2 | ... | TS #119 | TS #1 | TS #2 | ... | TS #119 |
| | PSI | | | | | | | | RES | | | | | | | | TS #1 | TS #2 | | TS #119 | TS #1 | TS #2 | | TS #119 |

| C1 | C2 | C3 | C4 |
|----|----|----|----|
| C5 | C6 | II | DI |
| CRC-4 | | | |

FIG. 9

| 1 | 2 | 3 | 4 | |
|---|---|---|---|---|
| RP | TSCC | RES | TPID | |
| TPID(high_5b) | | | | #Even frame |
| CRC-4 | | | | |
| | | | | |
| 1 | 2 | 3 | 4 | |
| CTRL | | TSGS | TPID | |
| TPID(low_5b) | | | | #Odd frame |
| CRC-4 | | | | |

FIG. 10

| | |
|---|---|
| Receive a high order optical transport network OTN frame | 1101 |
| Demap a first OSU from a first service container of the OTN frame, where a payload area of the first OSU is used to carry service data, and an overhead area of the first OSU carries a first indication that is a specified value and that indicates a bandwidth resize location of the service data in a plurality of OSUs | 1102 |
| Determine, based on the bandwidth resize location, a first location at which bandwidth of the plurality of OSUs changes from first bandwidth to second bandwidth | 1103 |
| Continue to demap, from the first service container of the OTN frame, a part that is in the plurality of OSUs and that is located before the first location, and demap, from a second service container of the OTN frame, a part that is in the plurality of OSUs and that is located after the first location | 1104 |

FIG. 11

NE 1          NE 2          NE 3

FIG. 12

| NE1 | NE 2 | NE 3 |
|---|---|---|

1301: Map received service data to a plurality of OSUs

1302: Resize bandwidth of the OSU at a bandwidth resize location y

1303: Determine a first location 1 based on a first indication

1304: Generate a mapping location Y1 corresponding to an actual change location of the bandwidth of the OSU

1305: Based on the mapping location Y1 as a boundary point, map a part that is in the plurality of OSUs and that is located before the first location 1 to a first service container of the ODU frame, and map a part that is in the plurality of OSUs and that is located after the first location 1 to a second service container of the ODU frame

1306: ODU frame

1307: Demap a first OSU from the first service container of the received ODU frame

1308: Determine the first location 1 based on a location of a BWR_IND in the plurality of OSUs and a value of HOPACC

1309: Generate a demapping location Y1 corresponding to the first location 1

1310: Based on the demapping location Y1, continue to demap, from the first service container of the ODU frame, a part that is in the plurality of OSUs and that is located before the first location 1, and demap, from the second service container of the ODU frame, a part that is in the plurality of OSUs and that is located after the first location 1

TO FIG. 13B

FIG. 13A

CONT. FROM FIG. 13A

1311: Determine a first location 2 based on the first indication

1312: Generate a mapping location Y2 corresponding to an actual change location of the bandwidth of the OSU

1313: Based on the mapping location Y2 as a boundary point, map a part that is in the plurality of OSUs and that is located before the first location 2 to the first service container of the ODU frame, and map a part that is in the plurality of OSUs and that is located after the first location 2 to the second service container of the ODU frame

1314: ODU frame

1315: Demap the first OSU from the first service container of the received ODU frame

1316: Determine the first location 2 based on the location of the BWR_IND in the plurality of OSUs and the value of the HOPACC

1317: Generate a demapping location Y2 corresponding to the first location 2

1318: Based on the demapping location Y2, continue to demap, from the first service container of the ODU frame, the part that is in the plurality of OSUs and that is located before the first location 2, and demap, from the second service container of the ODU frame, the part that is in the plurality of OSUs and that is located after the first location 2

1319: Demap the service data from the OSU

FIG. 13B

FIG. 14

Bandwidth resize apparatus

Processing unit — 1501

Receiving unit — 1502

Sending unit — 1503

FIG. 15

— 1600

Bandwidth resize apparatus

Communication interface — 1610

Processor — 1620

Memory — 1630

FIG. 16

## INTERNATIONAL SEARCH REPORT

| International application No. |
|---|
| **PCT/CN2023/132661** |

| A. | CLASSIFICATION OF SUBJECT MATTER |
|---|---|

H04Q 11/00(2006.01)i

According to International Patent Classification (IPC) or to both national classification and IPC

| B. | FIELDS SEARCHED |
|---|---|

Minimum documentation searched (classification system followed by classification symbols)

IPC: H04Q H04L

Documentation searched other than minimum documentation to the extent that such documents are included in the fields searched

Electronic data base consulted during the international search (name of data base and, where practicable, search terms used)

CNKI, CNTXT, ENTXT, ENTXTC, DWPI, ITU: 带宽, 速率, 调整, 指示, 位置, 字节, 映射, 时隙, 数, 光传送网, 光传输网, bandwidth, band width, rate, resize, indicate, indication, position, byte, mapping, tributary slot, number, OTN

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 103973265 A (HUAWEI TECHNOLOGIES CO., LTD.) 06 August 2014 (2014-08-06) description, paragraphs 0003-0006 and 0025-0114, and figures 3-6 | 1-38 |
| A | CN 103825668 A (HUAWEI TECHNOLOGIES CO., LTD.) 28 May 2014 (2014-05-28) entire document | 1-38 |
| A | CN 109391370 A (RAISECOM TECHNOLOGY CO., LTD.) 26 February 2019 (2019-02-26) entire document | 1-38 |
| A | US 2016028474 A1 (ALCATEL LUCENT) 28 January 2016 (2016-01-28) entire document | 1-38 |
| A | US 8854963 B1 (PMC-SIERRA US, INC.) 07 October 2014 (2014-10-07) entire document | 1-38 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 February 2024** | **21 February 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT

Information on patent family members

| International application No. |
|---|
| **PCT/CN2023/132661** |

| Patent document cited in search report | | | Publication date (day/month/year) | Patent family member(s) | | | Publication date (day/month/year) |
|---|---|---|---|---|---|---|---|
| CN | 103973265 | A | 06 August 2014 | None | | | |
| CN | 103825668 | A | 28 May 2014 | None | | | |
| CN | 109391370 | A | 26 February 2019 | None | | | |
| US | 2016028474 | A1 | 28 January 2016 | JP | 2016514434 | A | 19 May 2016 |
| | | | | EP | 2779491 | A1 | 17 September 2014 |
| | | | | WO | 2014139831 | A1 | 18 September 2014 |
| US | 8854963 | B1 | 07 October 2014 | None | | | |

Form PCT/ISA/210 (patent family annex) (July 2022)

**REFERENCES CITED IN THE DESCRIPTION**

**Patent documents cited in the description**

- CN 202211469162